(19) **Europäisches Patentamt European Patent Office Office européen des brevets**

(11) **EP 3 102 467 B1**

(12) **FASCICULE DE BREVET EUROPEEN**

(45) Date de publication et mention de la délivrance du brevet:
**06.03.2019 Bulletin 2019/10**

(51) Int Cl.:
***B60R 25/20*** *(2013.01)*

(21) Numéro de dépôt: **15705634.2**

(22) Date de dépôt: **15.01.2015**

(86) Numéro de dépôt international:
**PCT/FR2015/050096**

(87) Numéro de publication internationale:
**WO 2015/118239 (13.08.2015 Gazette 2015/32)**

(54) **PROCEDE DE DEMARRAGE A DISTANCE SECURISE D'UN VEHICULE**

VERFAHREN FÜR SICHERES UND ENTFERNTES STARTEN EINES KRAFTFAHRZEUGES

METHOD FOR SAFELY AND REMOTELY STARTING A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.02.2014 FR 1450945**

(43) Date de publication de la demande:
**14.12.2016 Bulletin 2016/50**

(73) Titulaire: **Renault S.A.S.**
**92100 Boulogne-Billancourt (FR)**

(72) Inventeurs:
 • **MONTHEL, Nicolas**
  **F-78000 Versailles (FR)**
 • **HORBEZ, Jérémie**
  **F-91770 Saint Vrain (FR)**
 • **TUNETIER, Christophe**
  **F-91610 Ballancourt sur Essonne (FR)**
 • **LABAT, Sylvain**
  **F-95870 Bezons (FR)**
 • **LAZOU, Sylvain**
  **F-91610 Ballancourt sur Essone (FR)**
 • **GIL, Daniel**
  **F-75013 Paris (FR)**

(56) Documents cités:
 **EP-A1- 2 313 642    DE-C1- 4 402 197**
 **US-A- 5 621 252**

**EP 3 102 467 B1**

**Description**

La présente invention concerne un procédé de démarrage à distance sécurisé d'un véhicule et un système pour la mise en oeuvre d'un tel procédé.

L'invention concerne également un véhicule comportant ce système de démarrage à distance sécurisé.

Dans l'optique d'augmenter le confort des conducteurs, des procédés et systèmes de démarrage à distance de véhicule ont été mis au point pour permettre notamment le refroidissement ou le réchauffement de l'habitacle du véhicule lorsque la température y est insupportable et avant que ce dernier ne soit piloté.

Traditionnellement, le démarrage à distance du véhicule est réalisé à partir d'un dispositif d'activation tel qu'une télécommande, par exemple la clef du véhicule optionnellement pourvue de boutons actionnables, qui est apte à transmettre un signal radioélectrique à une unité de contrôle également connue sous l'acronyme BCM (« Body Control Module » pour contrôleur habitacle). Cette unité de contrôle à réception dudit signal transmet une instruction à un module de commande moteur pour déclencher le démarrage du véhicule.

Toutefois, un problème général de ces procédés et systèmes subsiste qui est celui d'éviter que le véhicule dont le moteur est alors en marche ne soit subtilisé par un tiers malintentionné.

Pour pallier ce problème, on connaît dans l'état de l'art des procédés et systèmes de démarrage à distance qui permettent d'activer l'arrêt du moteur lorsqu'une intrusion dans le véhicule est détectée par des capteurs de type volumétrique agencés dans l'habitacle ou encore par des capteurs susceptibles de détecter l'ouverture d'une portière du véhicule ou la variation de vitesse angulaire d'une roue de ce dernier.

On connaît également dans l'état de l'art, le brevet EP2313642 qui décrit un procédé et système de démarrage à distance qui prévoit de maintenir le véhicule à un régime moteur de ralenti en provoquant l'arrêt de ce dernier lorsqu'un capteur détecte une activation de la pédale d'accélérateur.

Cependant, un inconvénient majeur de ces procédés et systèmes de démarrage à distance est que les capteurs qu'ils mettent en oeuvre pour assurer la sécurité du véhicule lorsque son moteur est en marche, peuvent être aisément neutralisés par ce tiers malintentionné.

La présente invention vise à résoudre ces problèmes résultant des inconvénients de l'état de l'art, en proposant un procédé et un système de démarrage à distance sécurisé qui sont robustes et d'une grande fiabilité ainsi que d'une mise en oeuvre simple.

L'invention concerne un procédé de démarrage à distance sécurisé d'un véhicule comprenant les étapes suivantes :

- activation du démarrage du moteur du véhicule ;
- détection d'un événement comprenant :

  • détermination d'une variation de couple sur un intervalle de temps d'analyse à partir de signaux de commande relatifs à des instructions de demande de couple moteur émanant d'un module de régulation de ralenti moteur ;
  • comparaison de la variation de couple déterminée avec une valeur seuil de couple, et

- déclenchement de l'arrêt du moteur lorsque la variation de couple déterminée est supérieure ou égale à la valeur seuil de couple.

Dans d'autres modes de réalisation :

- l'étape de détermination d'une variation de couple est réalisée entre au moins un premier ensemble de couples demandés dans un premier intervalle de temps et au moins un deuxième ensemble de couples demandés dans un deuxième intervalle de temps ;
- des premier et deuxième intervalles de temps sont consécutifs ;
- le procédé prévoit une réitération de l'étape de détection selon une fréquence qui est configurable ;
- l'étape de détermination met en oeuvre un algorithme de type méthode des trapèzes ou méthode des rectangles ;
- l'intervalle de temps d'analyse est sensiblement égal à la somme des premier et deuxième intervalles de temps ;
- la valeur seuil de couple est configurée en fonction d'un événement à détecter, et
- l'événement correspond à un décollage du véhicule par l'embrayage ou à un décollage du véhicule par une application d'une consigne de couple définie par un enfoncement d'une pédale d'accélérateur.

L'invention concerne aussi un système de démarrage à distance sécurisé d'un véhicule pour la mise en oeuvre d'un tel procédé, comprenant un module de commande moteur susceptible de démarrer ou d'arrêter le moteur du véhicule, le système comprenant :

- un module de surveillance d'une variation de couple sur un intervalle de temps d'analyse à partir des signaux de commande relatifs à des instructions de demande de couple moteur, et
- un module de régulation de ralenti moteur apte à émettre lesdits signaux,

le module de surveillance étant relié au module de commande moteur et au module de régulation de ralenti.

Avantageusement, le module de surveillance comporte des éléments matériels et logiciels qui sont aptes à réaliser la détection d'un événement, notamment un décollage du véhicule par l'embrayage ou à un décollage du véhicule par une application d'une consigne de couple définie par un enfoncement d'une pédale d'accélérateur.

L'invention concerne également un véhicule comprenant un tel système de démarrage à distance sécurisé.

Un des avantages de l'invention est de pouvoir détecter le déplacement du véhicule notamment lors d'un décollage de ce dernier à l'embrayage.

D'autres avantages et caractéristiques de l'invention apparaîtront mieux à la lecture de la description d'un mode de réalisation préféré qui va suivre, en référence aux figures, réalisé à titre d'exemple indicatif et non limitatif :

- la figure 1 est une représentation schématique du système de démarrage à distance sécurisé du véhicule selon le mode de réalisation de l'invention ;
- la figure 2 est un logigramme relatif au procédé de démarrage à distance sécurisé du véhicule selon le mode de réalisation de l'invention ;
- la figure 3 est un organigramme relatif à une étape d'activation du démarrage à distance du véhicule selon le mode de réalisation de l'invention ;
- la figure 4 représente une intégrale de régulation de ralenti selon le mode de réalisation de l'invention,
- la figure 5 représente la variation de couple par rapport au temps selon le mode de réalisation de l'invention, et
- la figure 6 représente un calcul de la variation de couple réalisé à partir de l'intégrale de régulation de ralenti selon le mode de réalisation de l'invention.

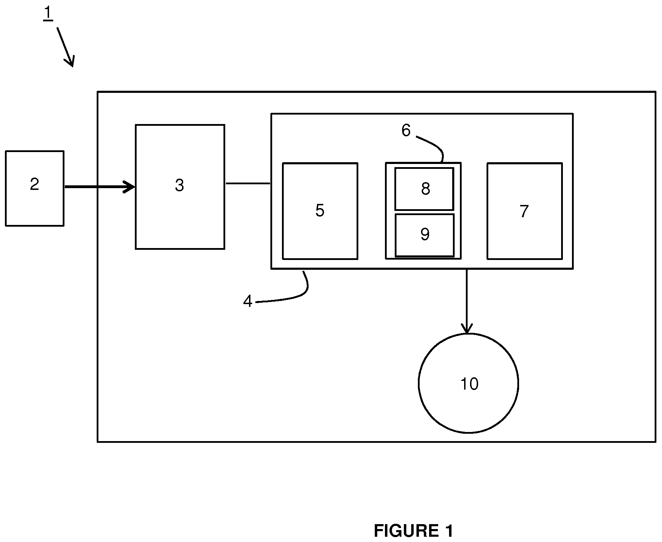

Sur la figure 1, est représenté un mode de réalisation du système 1 de démarrage à distance sécurisé d'un véhicule comprenant un dispositif d'activation 2 du démarrage à distance, une unité de contrôle 3 et un dispositif de contrôle moteur 4. Seuls les éléments nécessaires à la compréhension de l'invention ont été figurés.

Le dispositif d'activation 2 de démarrage à distance correspond par exemple à :

- une télécommande comme une clef du véhicule pourvue de boutons qui sont susceptibles d'être actionnés ;
- un ordinateur de bord du véhicule qui peut être programmé pour démarrer le véhicule à une date et à une heure données, et/ou
- un dispositif télématique comme un ordinateur distant ou encore un smartphone.

Ce dispositif d'activation 2 est apte à communiquer avec l'unité de contrôle 3 qui est comprise dans le véhicule. Cette unité de contrôle 3 est apte à réaliser un traitement du signal d'activation reçu du dispositif d'activation 2 afin d'initier le démarrage du véhicule. Cette unité de contrôle 3 est également apte sur la base du traitement de ce signal à déclencher le verrouillage/déverrouillage des ouvrants du véhicule et gérer l'activation/désactivation des équipements de refroidissement et/ou de chauffage du véhicule.

Dans ce système 1 de démarrage à distance sécurisé, le dispositif de contrôle 4 comprend notamment un module de régulation 5 du régime moteur, un module de surveillance 6 et un module de commande moteur 7.

Ce dispositif de contrôle moteur 4 plus connu sous l'acronyme ECM (« Engine Control Module »), est apte à piloter le moteur 10 du véhicule en fonction de données d'information qu'il reçoit.

Le moteur 10 piloté par le dispositif de contrôle 4, est un moteur 10 à combustion interne, par exemple du type à quatre temps et à quatre cylindres en ligne, qui est équipé d'un dispositif d'alimentation en carburant, par exemple du type injection multipoint où chaque cylindre est alimenté en carburant par un électro-injecteur spécifique.

L'ouverture de chaque électro-injecteur est commandée par le module de commande 7 de ce dispositif de contrôle 4, qui détermine la quantité de carburant injectée suivant les conditions de fonctionnement. Ce module de commande 7 est apte à démarrer et à arrêter le moteur 10. Il est également apte à augmenter le couple moteur notamment lorsqu'il reçoit une consigne du module de régulation 5 de ralenti afin de maintenir le régime de ralenti notamment en agissant sur des injecteurs et des moyens actuateurs du moteur 10.

Ce module de régulation 5 de ralenti du système 1 de démarrage à distance sécurisé permet de commander et/ou réguler le régime variable de ralenti moteur. La phase de ralenti correspond normalement à la situation où le moteur 10 est en marche et la pédale d'accélérateur n'est pas activée.

Le module de régulation 5 permet alors d'assurer le ralliement du régime du moteur 10 à un régime de consigne, en régulant ce régime autour de ce régime de consigne malgré d'éventuelles perturbations et le passage de diverses phases transitoires telles qu'une phase de démarrage du moteur 10.

Ainsi le module de régulation 5 permet d'assurer la stabilité du moteur 10 à bas régime en tenant compte notamment de conditions d'entrée en phase de ralenti qui peuvent varier considérablement, en ce qui concerne par exemple la température de l'eau de refroidissement du moteur 10, la température de l'air, la présence éventuelle de perturbations aléatoires dues à l'enclenchement d'un consommateur d'énergie électrique (dispositif d'éclairage, ventilateur) ou mécanique (équipement de refroidissement/chauffage, direction assistée, embrayage).

Pour assurer la commande du régime moteur en phase de ralenti, ce module de régulation 5 met en oeuvre un algorithme de calcul de type correcteur PID (acronyme de « Proportionnelle Intégrale et Dérivée ») pour générer et délivrer par la suite des signaux de commande relatifs à des instructions de demande de couple qui sont transmis ensuite au module de commande 7 auquel il est relié. Ce module de régulation 5 est apte à recevoir des signaux d'entrée relatifs au fonctionnement du moteur 10 et des organes périphériques, à effectuer des opérations et générer les signaux de commande.

Le module de surveillance 6 est également relié à ce module de régulation 5. Il comprend classiquement des éléments matériels 8 et logiciels 7 qui sont aptes à effectuer des calculs pour notamment réaliser des traitements particuliers des signaux de commande transmis par le module de régulation 5 au module de commande moteur 7. Les éléments matériels 8 comprennent un CPU, une mémoire vive (RAM), une mémoire morte (ROM), des convertisseurs analogiques-numériques (A/D), et différentes interfaces d'entrées et de sorties.

Ce système 1 est apte à mettre en oeuvre un procédé de démarrage à distance sécurisé du véhicule.

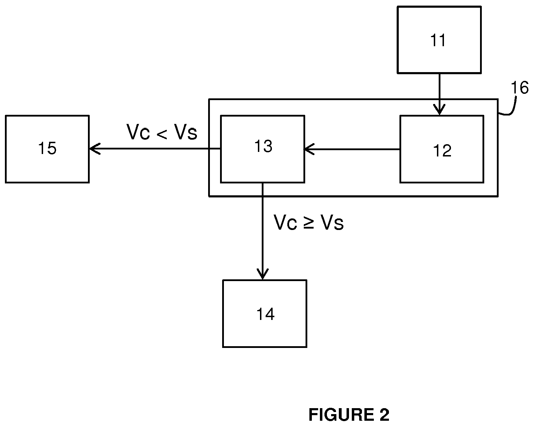

Ce procédé qui est représenté sur la figure 2, comprend une étape d'activation 11 du démarrage du moteur 10 du véhicule dans laquelle le dispositif d'activation 2 est apte à transmettre un signal de démarrage à l'unité de contrôle 3 localisée dans le véhicule.

Cette unité de contrôle 3 effectue alors un traitement de ce signal de démarrage qui consiste à décoder ledit signal et à générer une instruction de démarrage du moteur 10.

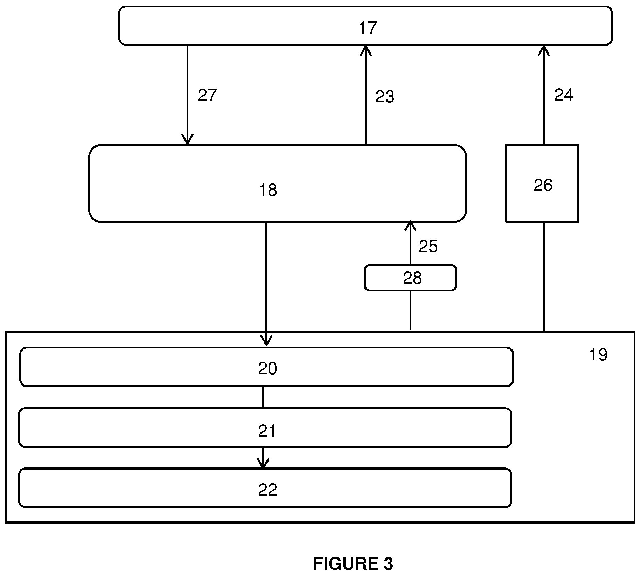

Plus précisément, lors de cette étape d'activation 11 du démarrage à distance, l'unité de contrôle 3 met en oeuvre les étapes suivantes qui sont visibles sur la figure 3:

- détermination 17 de modes de démarrage du véhicule ;
- attente 18 d'un signal de démarrage à distance ;
- déclenchement 19 du démarrage à distance du moteur 10 du véhicule, et
- réception 26 d'une information de l'unité de contrôle 3 par le dispositif de contrôle 4 que le moteur 10 est à l'arrêt.

Lors de l'étape de détermination 17 de modes de démarrage du véhicule, l'unité de contrôle 3 est apte à vérifier l'état de paramètres de sécurité du véhicule afin d'autoriser des modes de démarrage du véhicule, à savoir si le véhicule peut être démarré lorsque le conducteur est dans l'habitacle du véhicule et/ou à l'inverse lorsque le conducteur n'est pas dans l'environnement immédiat du véhicule pour un démarrage de ce dernier à distance.

Les paramètres de sécurité dont l'état est vérifié, concernent par exemple la position du boîtier de vitesses à savoir s'il est au point mort ou en mode parking, le verrouillage des portières, etc...

Ainsi, si le résultat de la vérification de l'état des paramètres de sécurité est satisfaisant, l'unité de contrôle 3 met alors en oeuvre 27 l'étape d'attente 18 de réception d'un signal de démarrage en provenance du dispositif d'activation 2. A l'inverse si ce résultat n'est pas satisfaisant, l'unité de contrôle 3 n'autorise un démarrage que lorsque le conducteur est dans l'habitacle du véhicule.

On notera que l'unité de contrôle 3 peut revenir 23 à l'étape de détermination 17 de modes de démarrage si l'état d'un paramètre de sécurité a changé, par exemple qu'une portière du véhicule n'est plus verrouillée.

A réception du signal de démarrage, l'unité de contrôle 3 met en oeuvre l'étape de déclenchement 19 du démarrage du moteur 10 du véhicule qui prévoit les sous-étapes suivantes:

- initiation 20 du démarrage à distance lors de laquelle le signal de démarrage reçu est décodé et une instruction de démarrage du moteur est générée comprenant notamment une définition du temps durant lequel le moteur 10 restera en marche ;
- transmission 21 de l'instruction au module de commande 7 du dispositif de contrôle moteur 4, et
- réception 22 par l'unité de contrôle 3 d'une information provenant du dispositif de contrôle 4 que le moteur 10 est en marche.

L'unité de contrôle 3 est également apte à mettre en oeuvre une étape de réception 26 d'une information provenant du dispositif de contrôle 4, relative à l'arrêt du moteur 10. Dès lors, l'unité de contrôle 3 revient 24 alors à l'étape de détermination 17 de modes de démarrage du véhicule.

On notera que l'unité de contrôle 3 revient 25 également à l'étape d'attente 18 d'un signal de démarrage à distance lorsque le démarrage à distance du moteur est arrêté 28 suite à l'expiration du temps de marche défini lors de l'étape d'initiation 20 du démarrage ou lorsque l'unité de contrôle 3 a reçu un signal d'arrêt du moteur 10 en provenance du dispositif d'activation 2.

Ainsi que nous l'avons vu précédemment, à la réception de cette instruction, le module de commande moteur 7 déclenche alors une procédure de démarrage du moteur 10, qui une fois démarré fonctionne en régime de ralenti. Ce régime de ralenti moteur est entretenu par une consigne de couple moteur contrôlée par le module de régulation 5.

Un tel régime de ralenti moteur est cependant perturbé lorsqu'un consommateur d'énergie électrique ou mécanique du véhicule est activé, du fait notamment que ce consommateur sollicite le moteur 10 par une prise de couple. Afin de compenser cette prise de couple et de pouvoir maintenir le régime moteur, le module de régulation 5 génère alors les signaux de commande relatifs à des instructions de demande de couple. Ces signaux de commande sont transmis au module de commande moteur 7 afin de modifier la consigne de couple moteur 10, en l'augmentant.

Les signaux de commande sont transmis au module de commande 7 par l'intermédiaire du module de surveillance 6 qui est apte, à partir de ces signaux, à détecter un événement qui correspond, lorsque le véhicule a été démarré à distance, à un décollage à l'embrayage ou encore à un décollage du véhicule par une application d'une consigne de couple définie par un enfoncement de la pédale d'accélérateur. De préférence dans ce mode de réalisation, l'événement à détecter est le décollage à l'embrayage.

Pour ce faire, le procédé comprend une étape de détection 16 de l'événement comprenant les étapes suivantes :

- détermination 12, à partir des signaux de commande, d'une variation de couple Vc sur un intervalle de temps d'analyse T prédéfinie et configurable, et
- comparaison de la variation de couple Vc avec une valeur seuil de couple Vs.

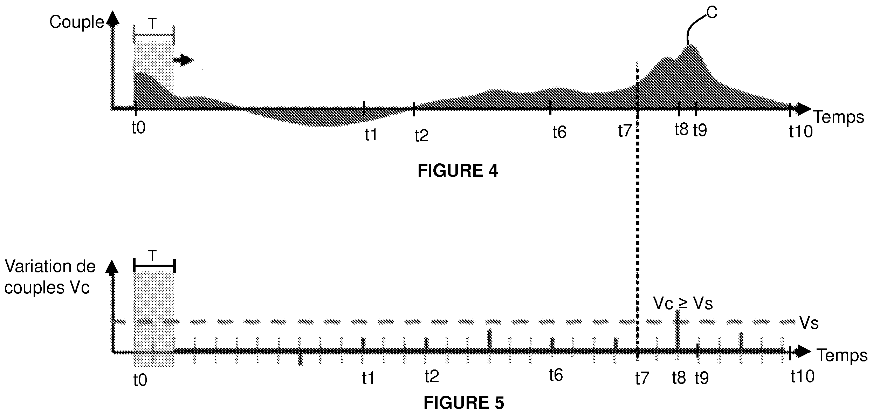

L'étape de détermination 12 comprend une sous-étape de traitement des signaux de commande. Cette sous-étape de traitement des signaux, illustrée sur les figures 3, 4 et 5, est réalisée à partir de la mise en oeuvre par les éléments matériels 8 et logiciels 7 du module de surveillance 6 d'une analyse numérique des signaux de commande consistant en une intégration d'une fonction f(t) correspondant à ces signaux et qui est illustré par la courbe C visible sur les figures 3 et 5.

Pour ce faire, la sous-étape de traitement prévoit un prétraitement de ces signaux de commande mettant en oeuvre un calcul d'une intégrale de la courbe C relative à ces signaux dite intégrale de régulation de ralenti, qui est ensuite enregistrer dans la mémoire du module de surveillance 6. Ce calcul est réalisé en fonction des éléments logiciels 7 compris dans la mémoire du module de surveillance 6 et des éléments matériels 8 qui utilisent les valeurs de couples demandés relatives aux signaux de commande et qui sont enregistrées dans la mémoire du module de surveillance 6 afin de calculer cette intégrale de la courbe C. Cette intégrale de régulation de ralenti est illustrée à la figure 4 et est formulée dans cet exemple de la figure 4 de la manière suivante : $\int_{t0}^{t10} f(t)dt$, avec t0 qui correspond à l'instant où le moteur 10 du véhicule est démarré en étant maintenu à un régime de ralenti et t10 à l'instant où le couple moteur est nul suite à la détection de l'événement à l'instant t8.

Le prétraitement de ces signaux de commande est réalisé ainsi au fur et à mesure que les valeurs de couple demandées constituant les signaux de commande sont générées par le module de régulation 5.

Dans le cadre du traitement de ces signaux, l'intervalle de temps d'analyse T est configuré en fonction de l'événement à détecter. Plus précisément, il est paramétré afin de correspondre au temps nécessaire pour que l'événement qui doit être détecté par le module de surveillance 6 puisse être identifié. Lorsque l'événement à détecter est le décollage à l'embrayage du véhicule, cet intervalle de temps d'analyse T est alors compris entre environ 3 et 20 secondes.

Ainsi, la détermination par calcul de la variation de couple Vc est réalisée à partir de ces signaux prétraités dans des intervalles de temps d'analyse T.

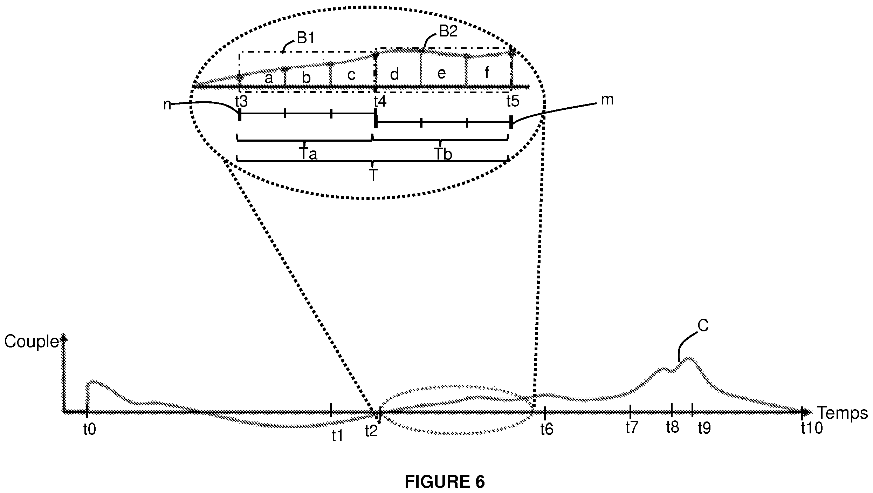

En référence à la figure 6, le calcul de la variation de couple Vc est réalisé entre au moins un premier ensemble de couples demandés B1 dans un premier intervalle de temps Ta et au moins un deuxième ensemble de couples demandés B2 dans un deuxième intervalle de temps Tb. La somme des premier Ta et deuxième Tb intervalles de temps est égale à l'intervalle de temps d'analyse T.

Le premier intervalle de temps Ta délimité par les instants t3 et t4 et le deuxième intervalle de temps Tb délimité par les instants t4 et t5 sont consécutifs et pas forcément égaux l'un à l'autre.

Ainsi que l'illustre la figure 6, le premier ensemble de couples demandés B1 correspond à l'aire de la surface délimitée par cette courbe et l'axe des abscisses, ici l'axe des temps, sur le premier intervalle de temps Ta. S'agissant du deuxième ensemble de couples demandés B2, il correspond à l'aire de la surface délimitée par cette courbe et l'axe des temps, sur le deuxième intervalle de temps Tb.

Pour réaliser le traitement des signaux de commande, les éléments matériels 8 et logiciels 7 peuvent alors mettre en oeuvre des algorithmes comme la méthode dite des trapèzes ou encore celle dite des rectangles.

Dans le présent mode de réalisation, le module de surveillance 6 met de préférence en oeuvre l'algorithme relatif à la méthode des trapèzes qui permet de calculer une intégrale glissante de la partie de l'intégrale de régulation de ralenti comprise dans l'intervalle de temps d'analyse T.

On notera que l'algorithme relatif à la méthode des trapèzes a pour avantage d'améliorer la précision de la variation de couple Vc déterminée sur l'intervalle de temps d'analyse T.

Pour ce faire, le premier ensemble de couples B1 est divisé en plusieurs sous-ensemble de couples a, b c, sur n pas de temps du premier intervalle de temps Ta. De même, le deuxième ensemble de couples B2 est divisé en plusieurs sous-ensemble de couples d, e, f, sur m pas de temps du deuxième intervalle de temps Tb.

De manière similaire aux premier B1 et deuxième B2 ensembles de couples, chaque sous-ensemble de couples a, b, c, d, e, f correspond à l'aire de la surface entre la courbe et l'axe des temps pour chaque n et m pas de temps. On notera que les n et m pas de temps de ne sont pas forcément égaux l'un à l'autre.

Ainsi, l'aire B1 relative au premier ensemble de couples B1 et l'aire B2 relative au deuxième ensemble de couples B2 sont respectivement égaux à :

- B1 = a + b + c ;
- B2 = d + e + f.

A partir de la mise en oeuvre de cette algorithme, les éléments matériels 8 et logiciels 7 du module de surveillance 6 déterminent alors des valeurs de couples pour les premier B1 et deuxième B2 ensembles de couples, en mettant en oeuvre les équations suivantes :

- pour le premier ensemble de couples B1 :

$$\int_{t3}^{t4} f(t)dt = \frac{t4 - t3}{n}\left(\frac{f(t3) + f(t4)}{2} + \sum_{k=1}^{n-1} f\left(t3 + k\frac{t4 - t3}{n}\right)\right) + R_n(f)$$

avec $R_n(f)$ qui correspond à l'erreur quadratique et qui est égale à : $\frac{(t4-t3)^3}{12n^2} f''(\xi)$ pour $\xi \in [t3,t4]$

- pour le deuxième ensemble de couples B2 :

$$\int_{t4}^{t5} f(t)dt = \frac{t5 - t4}{m}\left(\frac{f(t4) + f(t5)}{2} + \sum_{k=1}^{m-1} f\left(t4 + k\frac{t5 - t4}{m}\right)\right) + R_m(f)$$

avec $R_m(f)$ qui correspond à l'erreur quadratique et qui est égale à : $\frac{(t5-t4)^3}{12m^2} f''(\xi)$ pour $\xi \in [t4,t5]$

La variation de couple Vc est égale alors à la différence entre la valeur de couple du deuxième ensemble de couples B2 et la valeur de couple du premier ensemble de couples B1 soit : Vc = B2 - B1

Sur la figure 5 qui illustre différentes variations de couples Vc en fonction du temps, des exemples de variations de couples Vc ont été calculées aux instants t1, t2, t6 et t8 par le module de surveillance 6.

Une fois que la variation de couple Vc est calculée, le procédé prévoit une étape de comparaison 13 entre la variation de couple Vc calculée entre les premier B1 et deuxième B2 ensembles de couples et une valeur seuil de détection Vs qui est configurée en fonction de l'événement à détecter, ici le décollage à l'embrayage.

Si la valeur de variation de couple Vc est sensiblement supérieure ou égale à la valeur seuil de détection Vs soit Vc ≥ Vs, comme par exemple à l'instant t8 sur la figure 5, alors le module de surveillance 6 transmet au module de commande 7 une instruction visant à provoquer le déclenchement 14 de l'arrêt du moteur 10. On remarquera que dans ce contexte, le véhicule a commencé à décoller à l'embrayage à l'instant t7. Le dispositif de contrôle moteur 4 transmet ensuite l'information relative à l'arrêt du moteur à l'unité de contrôle 3.

A l'inverse, si la valeur de variation de couple Vc est inférieure à la valeur seuil de détection Vs soit Vc < Vs, comme c'est par exemple le cas aux instants t1, t2 et t6, alors le module de surveillance 6 ne transmet aucune instruction au module de commande 7 visant à arrêter le moteur 10. Dès lors le module de commande 7 va en fonction des signaux de commande générés par le module de régulation 5, piloter 15 le moteur 10 afin d'augmenter le couple de ce dernier pour compenser la prise de couple et maintenir ainsi le régime moteur.

Dans ce procédé, la fréquence de réitération de l'étape de détection 16 de l'événement est configurable. Ainsi, cette fréquence peut être configurée de sorte que cette étape du procédé soit initiée environ entre 0,2 et 3 secondes.

On notera que la configuration de cette fréquence à des valeurs élevées permet, grâce à la mise en oeuvre du procédé, de détecter l'événement lorsque ce dernier est exécuté rapidement.

La présente invention n'est pas limitée au mode de réalisation qui a été explicitement décrit, mais elle en inclut les diverses variantes et généralisations contenues dans le domaine des revendications ci-après.

**Revendications**

1. Procédé de démarrage à distance sécurisé d'un véhicule comprenant les étapes suivantes :

   - activation (11) du démarrage du moteur (10) du véhicule ;
   - détection (16) d'un événement comprenant :

     • détermination (12) d'une variation de couple (Vc) sur un intervalle de temps d'analyse (T) à partir de signaux de commande relatifs à des instructions de demande de couple moteur émanant d'un module de régulation (5) de ralenti moteur ;
     • comparaison (13) de la variation de couple (Vc) déterminée avec une valeur seuil de couple (Vs), et

   - déclenchement (14) de l'arrêt du moteur (10) lorsque la variation de couple (Vc) déterminée est supérieure ou égale à la valeur seuil de couple (Vs).

2. Procédé selon la revendication précédente, **caractérisé en ce que** l'étape de détermination (12) d'une variation de couple (Vc) est réalisée entre au moins un premier ensemble de couples demandés (B1) dans un premier intervalle de temps (T1) et au moins un deuxième ensemble de couples demandés (B2) dans un deuxième intervalle de temps (T2).

3. Procédé selon l'une quelconque des revendications précédentes, **caractérisé en ce que**, des premier et deuxième intervalles de temps (T1, T2) sont consécutifs.

4. Procédé selon l'une quelconque des revendications précédentes, **caractérisé en ce qu'**il prévoit une réitération de l'étape de détection (16) selon une fréquence qui est configurable.

5. Procédé selon l'une quelconque des revendications précédentes, **caractérisé en ce que** l'étape de détermination (12) met en oeuvre un algorithme de type méthode des trapèzes ou méthode des rectangles.

6. Procédé selon l'une quelconque des revendications précédentes, **caractérisé en ce que** l'intervalle de temps d'analyse (T) est sensiblement égal à la somme des premier et deuxième intervalles de temps (T1, T2).

7. Procédé selon l'une quelconque des revendications précédentes, **caractérisé en ce que** la valeur seuil de couple (Vs) est configurée en fonction d'un événement à détecter.

8. Procédé selon l'une quelconque des revendications précédentes, **caractérisé en ce que** l'événement correspond à un décollage du véhicule par l'embrayage ou à un décollage du véhicule par une application d'une consigne de couple définie par un enfoncement d'une pédale d'accélérateur.

9. Système (1) de démarrage à distance sécurisé d'un véhicule pour la mise en oeuvre du procédé selon l'une quelconque des revendications précédentes, comprenant un module de commande moteur (7) susceptible de démarrer ou d'arrêter le moteur (10) du véhicule, **caractérisé en ce qu'**il comprend :

   - un module de surveillance (6) d'une variation de couple (Vc) sur un intervalle de temps d'analyse (T) à partir des signaux de commande relatifs à des instructions de demande de couple moteur, et
   - un module de régulation (5) de ralenti moteur apte à émettre lesdits signaux,

   le module de surveillance (6) étant relié au module de commande moteur (7) et au module de régulation (5) de ralenti.

10. Système (1) selon la revendication précédente, **caractérisé en ce que** le module de surveillance (6) comporte des éléments matériels (8) et logiciels (7) qui sont aptes à réaliser la détection (16) d'un événement, notamment un décollage du véhicule par l'embrayage ou à un décollage du véhicule par une application d'une consigne de couple définie par un enfoncement d'une pédale d'accélérateur.

11. Véhicule comprenant un système (1) de démarrage à distance sécurisé selon l'une quelconque des revendications 9 et 10.

**Patentansprüche**

1. Verfahren zum sicheren Fernstarten eines Fahrzeugs, welches die folgenden Schritte umfasst:

- Aktivierung (11) des Startens des Motors (10) des Fahrzeugs;
- Detektion (16) eines Ereignisses, welche umfasst:

• Bestimmung (12) einer Drehmomentänderung (Vc) in einem Analysezeitintervall (T) aus Steuersignalen, die sich auf Anweisungen zur Motordrehmomentanforderung von einem Modul zur Regelung (5) des Motorleerlaufs beziehen,
• Vergleich (13) der bestimmten Drehmomentänderung (Vc) mit einem Drehmomentschwellenwert (Vs), und

- Auslösung (14) des Abstellens des Motors (10), wenn die bestimmte Drehmomentänderung (Vc) größer oder gleich dem Drehmomentschwellenwert (Vs) ist.

2. Verfahren nach dem vorhergehenden Anspruch, **dadurch gekennzeichnet, dass** der Schritt der Bestimmung (12) einer Drehmomentänderung (Vc) zwischen wenigstens einer ersten Menge von angeforderten Drehmomenten (B1) in einem ersten Zeitintervall (T1) und wenigstens einer zweiten Menge von angeforderten Drehmomenten (B2) in einem ersten Zeitintervall (T2) durchgeführt wird.

3. Verfahren nach einem der vorhergehenden Ansprüche, **dadurch gekennzeichnet, dass** das erste und das zweite Zeitintervall (T1, T2) aufeinander folgen.

4. Verfahren nach einem der vorhergehenden Ansprüche, **dadurch gekennzeichnet, dass** es eine iterative Wiederholung des Schrittes der Detektion (16) mit einer Häufigkeit, welche konfigurierbar ist, vorsieht.

5. Verfahren nach einem der vorhergehenden Ansprüche, **dadurch gekennzeichnet, dass** im Schritt der Bestimmung (12) ein Algorithmus vom Typ der Trapezmethode oder Rechteckmethode durchgeführt wird.

6. Verfahren nach einem der vorhergehenden Ansprüche, **dadurch gekennzeichnet, dass** das Analysezeitintervall (T) im Wesentlichen gleich der Summe des ersten und zweiten Zeitintervalls (T1, T2) ist.

7. Verfahren nach einem der vorhergehenden Ansprüche, **dadurch gekennzeichnet, dass** der Drehmomentschwellenwert (Vs) in Abhängigkeit von einem zu detektierenden Ereignis konfiguriert wird.

8. Verfahren nach einem der vorhergehenden Ansprüche, **dadurch gekennzeichnet, dass** das Ereignis einem Anfahren des Fahrzeugs durch die Kupplung oder einem Anfahren des Fahrzeugs durch eine Anwendung eines Drehmoment-Sollwertes, der durch ein Niedertreten eines Gaspedals definiert wird, entspricht.

9. System (1) zum sicheren Fernstarten eines Fahrzeugs für die Durchführung des Verfahrens nach einem der vorhergehenden Ansprüche, welches ein Motorsteuermodul (7) umfasst, das dazu eingerichtet ist, den Motor (10) des Fahrzeugs zu starten oder abzustellen, **dadurch gekennzeichnet, dass** es umfasst:

- ein Modul zur Überwachung (6) einer Drehmomentänderung (Vc) in einem Analysezeitintervall (T) ausgehend von Steuersignalen, die sich auf Anweisungen zur Motordrehmomentanforderung beziehen, und
- ein Modul zur Regelung (5) des Motorleerlaufs, das geeignet ist, diese Signale zu senden,

wobei das Überwachungsmodul (6) mit dem Motorsteuermodul (7) und mit dem Modul zur Regelung (5) des Leerlaufs verbunden ist.

10. System (1) nach dem vorhergehenden Anspruch, **dadurch gekennzeichnet, dass** das Überwachungsmodul (6) Hardware- (8) und Softwareelemente (7) aufweist, welche geeignet sind, die Detektion (16) eines Ereignisses durchzuführen, insbesondere eines Anfahrens des Fahrzeugs durch die Kupplung oder eines Anfahrens des Fahrzeugs durch eine Anwendung eines Drehmoment-Sollwertes, der durch ein Niedertreten eines Gaspedals definiert wird.

11. Verfahren, welches ein System (1) zum sicheren Fernstarten nach einem der Ansprüche 9 und 10 umfasst.

**Claims**

1. Method for remotely and safely starting a vehicle comprising the following steps:

    - activation (11) of the starting of the engine (10) of the vehicle;
    - detection (16) of an event comprising:

        • determination (12) of a torque variation (Vc) over an analysis time interval (T) from control signals relating to engine torque demand instructions emanating from an engine idling regulation module (5);
        • comparison (13) of the determined torque variation (Vc) with a torque threshold value (Vs), and

    - triggering (14) of the stopping of the engine (10) when the determined torque variation (Vc) is greater than or equal to the torque threshold value (Vs).

2. Method according to the preceding claim, **characterized in that** the step of determination (12) of a torque variation (Vc) is performed between at least one first set of demanded torques (B1) in a first time interval (T1) and at least one second set of demanded torques (B2) in a second time interval (T2).

3. Method according to either one of the preceding claims, **characterized in that** first and second time intervals (T1, T2) are consecutive.

4. Method according to any one of the preceding claims, **characterized in that** it provides for a reiteration of the detection step (16) according to a frequency which is configurable.

5. Method according to any one of the preceding claims, **characterized in that** the determination step (12) applies an algorithm of trapezoid method or rectangle method type.

6. Method according to any one of the preceding claims, **characterized in that** the analysis time interval (T) is substantially equal to the sum of the first and second time intervals (T1, T2).

7. Method according to any one of the preceding claims, **characterized in that** the torque threshold value (Vs) is configured according to an event to be detected.

8. Method according to any one of the preceding claims, **characterized in that** the event corresponds to a take-off of the vehicle by the clutch or to a take-off of the vehicle by an application of a torque set point defined by a depression of an accelerator pedal.

9. System (1) for remotely and safely starting a vehicle for the implementation of the method according to any one of the preceding claims, comprising an engine control module (7) that can start or stop the engine (10) of the vehicle, **characterized in that** it comprises:

    - a module (6) for monitoring a torque variation (Vc) over an analysis time interval (T) from the control signals relating to engine torque demand instructions, and
    - an engine idling regulation module (5) capable of emitting said signals,

    the monitoring module (6) being linked to the engine control module (7) and to the idling regulation module (5) .

10. System (1) according to the preceding claim, **characterized in that** the monitoring module (6) comprises hardware elements (8) and software elements (7) which are able to perform the detection (16) of an event, notably a take-off of the vehicle by the clutch or a take-off of the vehicle by an application of a torque set point defined by a depression of an accelerator pedal.

11. Vehicle comprising a remote and safe starting system (1) according to either one of Claims 9 and 10.

**FIGURE 1**

FIGURE 2

FIGURE 3

Couple

T

C

t0    t1    t2    t6    t7    t8 t9    t10    Temps

**FIGURE 4**

Variation de
couples Vc

T

Vc ≥ Vs

Vs

t0    t1    t2    t6    t7    t8 t9    t10    Temps

**FIGURE 5**

FIGURE 6

**RÉFÉRENCES CITÉES DANS LA DESCRIPTION**

**Documents brevets cités dans la description**

- EP 2313642 A